# EUROPEAN PATENT APPLICATION

(11) **EP 2 387 185 A1**
(43) Date of publication of application: **16.11.2011**
(21) Application number: 10154882.4
(22) Date of filing: 26.02.2010
(51) Int. Cl.: H04L 12/58, H04M 3/533

(54) **Method and device for analyzing voice mail**

(71) Applicant: RESEARCH IN MOTION LIMITED, Waterloo, Ontario N2L 3W8 (CA)
(72) Inventor: Wilson, Nicholas Bryson, Kanata Ontario K2K 3K2 (CA)
(74) Representative: Patel, Binesh

(57) **Abstract**

The present disclosure provides a method and device for analyzing and responding to voice mail messages. A voice mail message may contain one or more addresses or phone numbers associated with the calling party. The portion of the voice mail message containing an address may be recognized and processed with speech recognition algorithms to determine one or more spoken addresses associated with the voice mail message. The recognized spoken addresses may be displayed by a communications device and the portion of the voice mail message recognized as containing the spoken addresses may be replayed in order for a user to confirm the recognized address. Communications to an address associated with the voice mail message may be enabled while the portion of the voice mail message is replayed.

## Description

The present application relates to a method and device for analyzing and responding to voice mail messages.

Telephone communications typically consist of a calling party dialling a telephone number associated with a communications device or a user of the communications device in order to establish communications between the calling party and the user. If the user does not or can not answer the call, a voice mail message typically can be left for the user through a voice mail system. Voice mail messages may comprise a spoken message and include a calling party's name, reason for calling and one or more phone numbers at which the calling party can be reached. The phone numbers provided in a voice mail message may or may not match the number associated with the device from which the calling party placed the call. The user may receive an indication from the voice mail system that a call was missed, that a voice mail message has been left for the user by the calling party, or both. The user reviews the voice mail message typically by listening to a recording of the spoken message. If the voice mail message includes one or more phone numbers for the calling party, the user may need to transcribe or memorize the phone numbers or replay the entire voice mail message in order to obtain the appropriate phone number for returning the call.

According to one aspect there is provided a method of analyzing and responding to voice mail messages in communications devices, the method comprising: analyzing a voice mail message; recognizing a portion of the voice mail message as a spoken address; presenting an indication of the recognized spoken address through a user interface of the communications device; detecting an actuation of the indication; and in response to the detected actuation, playing, by an audio output of the communications device, an audio recording of the portion of the voice mail message recognized as the spoken address, and enabling a communication to an address associated with the voice mail message.

In one implementation, the communication occurs during the playing of the audio recording of the portion of the voice mail message recognized as the spoken address.

In one implementation, the method further comprises, in response to the detected actuation, ceasing the analyzing of the voice mail message.

In one implementation, enabling the communication to the address associated with the voice mail message comprises initiating communication to the recognized spoken address.

In one implementation, enabling the communication to the address associated with the voice mail message comprises receiving the address associated with the voice mail message from a user input of the communications device and initiating communication to the received address.

In one implementation, presenting an indication of the recognized spoken address comprises displaying the recognized spoken address on a display of the communications device.

In one implementation, the method further comprises playing the voice mail message by the audio output during the analyzing of the voice mail message.

In one implementation, the method further comprises recognizing a second portion of the voice mail message as a second spoken address.

In one implementation, enabling the communication to the address associated with the voice mail message comprises presenting a communication initiation dialog including the recognized spoken address and the second recognized spoken address on a display of the communications device.

In one implementation, the method further comprises: detecting an actuation of one of the recognized spoken address and the second recognized spoken address; and initiating the communication to the actuated address.

In one implementation, recognizing a portion of the voice mail message as a spoken address further comprises using a speech recognition algorithm to recognize the spoken address.

In one implementation, presenting an indication comprises activating one of an audible alert, visible alert and vibration alert.

In one implementation, the method further comprises storing the recognized spoken address in a memory of the communications device.

In one implementation, the recognized spoken address comprises a telephone number.

According to another aspect there is provided a communications device for analyzing and responding to voice mail messages, comprising: a voice communications interface; an audio output; a user interface; and a controller for controlling the operation of the communications device; the controller being configured to: analyze a voice mail message; recognize a portion of the voice mail message as a spoken address; present an indication of the recognized spoken address through the user interface; detect an actuation of the indication; and in response to the detected actuation, play an audio recording of the portion of the voice mail message recognized as the spoken address through the audio output and enable a communication to an address associated with the voice mail message through the voice communications interface.

In one implementation, the controller is further configured to enable the communication during the playing of the audio recording of the portion of the voice mail message recognized as the spoken address.

In one implementation, the controller is further configured to, in response to the detected actuation of the indication, cease the analyzing of the voice mail message.

In one implementation, the controller is further configured to initiate a communication to the recognized spoken address.

In one implementation, the controller is further configured to receive an address associated with the voice mail message through the user interface of the communications device and initiate a communication to the received address.

According to another aspect there is provided a voice mail server for analyzing voice mail messages, the server comprising: a voice communications interface; and a controller for controlling the operation of the server; the controller being configured to: analyze a voice mail message; recognize a portion of the voice mail message as a spoken address; transmit an indication of the recognized spoken address; detect an actuation of the indication; and in response to the detected actuation, play an audio recording of the portion of the voice mail message recognized as the spoken address and enable a communication to an address associated with the voice mail message through the voice communications interface.

According to another example implementation of the present disclosure, there is provided a computer-readable storage medium in a communications device having an audio output and a voice communications interface, the medium having stored thereon computer-readable and computer-executable instructions, which, when executed by a processor, cause the communications device to perform actions comprising: analyzing a voice mail message; recognizing a portion of the voice mail message as a spoken address; presenting an indication of the recognized spoken address; detecting an actuation of the indication; and in response to the detected actuation, playing, by the audio output of a communications device, an audio recording of the portion of the voice mail message recognized as the spoken address, and enabling a communication to an address associated with the voice mail message.
FIG. 1A is a block diagram illustrating a communications device in accordance with one implementation of the present disclosure;
FIG. 1B is a block diagram illustrating a communications device in accordance with another implementation of the present disclosure;
FIG. 2 is a block diagram illustrating a communication system including a communications device in which example implementations of the present disclosure can be applied;
FIG. 3 illustrates a flowchart of a method described in the present disclosure; and
FIG. 4 illustrates a graphical representation of a front view of an example of a communications device in accordance with one implementation of the present disclosure.

Like reference numerals are used in the drawings to denote like elements and features.

The present disclosure provides a system and method for analyzing and responding to voice mail messages. A voice mail message may contain one or more addresses or phone numbers associated with the calling party. The portion of the voice mail message containing an address may be recognized and processed with speech recognition algorithms to determine one or more spoken addresses associated with the voice mail message. The recognized spoken addresses may be displayed by a communications device and the portion of the voice mail message recognized as containing the spoken addresses may be replayed in order for a user to confirm the recognized address. Communications to an address associated with the voice mail message may be enabled while the portion of the voice mail message is replayed.

Example implementations described below refer to a communications device such as a mobile communications device, a cellular telephone or a smartphone. It will be appreciated that the present disclosure is not limited to mobile devices and in some implementations may comprise a wired telephone device, or a personal computer or notebook which supports voice communications.

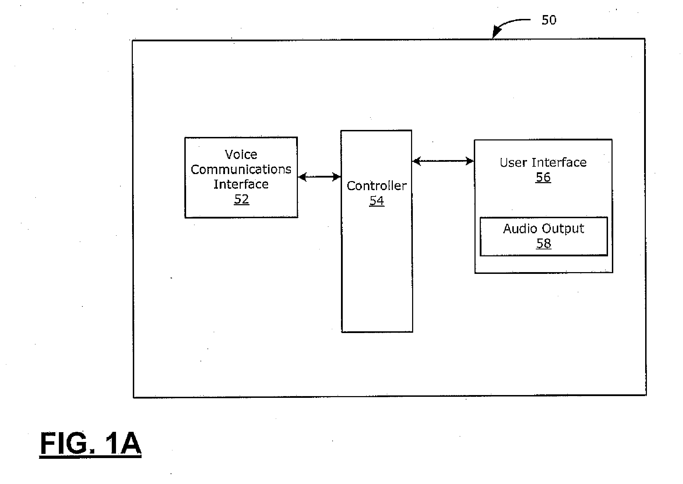

FIG. 1A illustrates a communications device 100 in which example implementations described in the present disclosure can be applied. Depending on the functionality provided by the communications device 100, in various implementations, the device may be a multiple-mode communications device configured for both data and voice communication, a mobile communications device, a smartphone, a mobile telephone or a PDA (personal digital assistant) enabled for wireless communication. In one implementation, the communications device 100 may comprise a land-line telephone device configured to connect to a public switched telephone network (PSTN) or a computer configured to support Voice-over-IP (VoIP) communications.

The communications device 100 is a two-way communications device having at least voice communications capabilities provided by a voice communications interface 52. The communications device 100 includes a controller comprising at least one controller 54 such as a microprocessor, which controls the overall operation of the communications device 100. The controller 54 interacts with device subsystems such as the voice communications interface 52, a user interface 56 and an audio output 58.

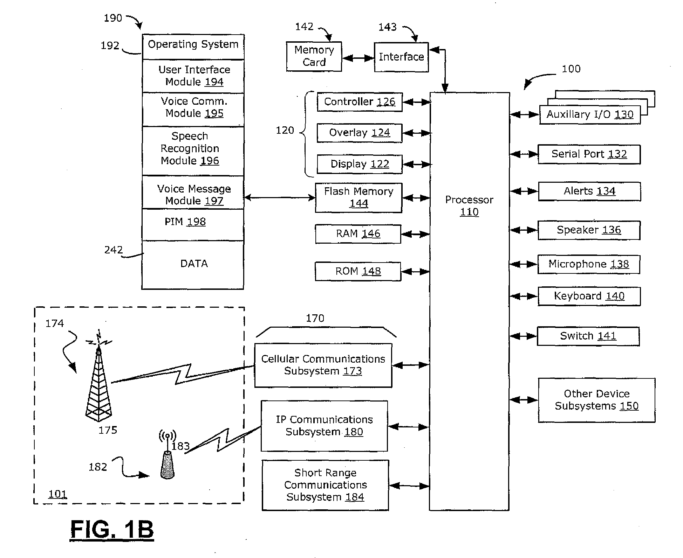

The voice communications interface 52 provides for voice communications between the communications device 100 and different systems or devices, which need not necessarily be similar devices. The functions of the voice communications interface 52 may be provided by a voice communication module 195, a voice message module 197, or a communications subsystem 170, or by a combination thereof, as described with reference to the communications device 100 illustrated in FIG. 1B.

The user interface 56 comprises one or more outputs for providing information, including indications of the occurrence of one or more events such as the recognition of spoken address in a voice mail message, to a user of the communications device 100. The user interface 56 also comprises one or more inputs for receiving information and commands from a user. The user interface 56 may comprise a user interface module 194, a display 120, a keyboard 140, alerts 134, the audio output 58, or a combination thereof, as described with reference to the communications device 100 illustrated in FIG. 1B.

The controller 54 is configured to analyze a voice mail message; recognize a portion of the voice mail message as a spoken address; present an indication of the recognized spoken address through the user interface 56; detect an actuation of the indication; and in response to the detected actuation, play an audio recording of the portion of the voice mail message recognized as the spoken address through the audio output 58 and enable a communication to an address associated with the voice mail message through the voice communications interface 52.

FIG. 1B illustrates one implementation of the communications device 100 in which example implementations described in the present disclosure can be applied. The communications device 100 is a two-way communications device having at least voice and possibly also data communication capabilities, and the capability to communicate with other computer systems, for example, via the Internet.

The communications device 100 includes the controller comprising at least one processor 54 such as a microprocessor which controls the overall operation of the communications device 100. The processor 54 interacts with device subsystems such as a display 120. In one implementation, the display 120 comprises a touchscreen display including a display (screen) 122, such as a liquid crystal display (LCD) screen, and a touch-sensitive input surface or overlay 124 connected to an electronic controller 126 that together make up the touchscreen display. The touch-sensitive overlay 206 and the electronic controller 208 provide a touch-sensitive input device and the processor 54 interacts with the touch-sensitive overlay 124 via the electronic controller 126.

The processor 54 also interacts with additional device subsystems, one or more auxiliary input/output (I/O) subsystems or devices 130; a serial port 132 such as a Universal Serial Bus (USB) data port; one or more alerts 134; a speaker 136; a microphone 138; keyboard or keypad 140; a switch 141; a removable memory card 142 and interface 143; flash memory 144; random access memory (RAM) 146; read only memory (ROM) 148; and other device subsystems generally designated as 150 which may include an input or navigational device such as a clickable scroll wheel (also referred to as a trackwheel or thumbwheel), optical trackpad or trackball. Some of the subsystems shown in FIG. 1B perform communication-related functions, whereas other subsystems may provide "resident" or on-device functions.

The processor 54 interacts with communications subsystems shown generally at 170 for exchanging signals with a wireless network 101. The wireless network 101 may comprise a Wireless Wide Area Network (WWAN) 174 and an IP network or wireless LAN (WLAN) 182 and other suitable network arrangements such as a public land mobile network (PLMN) or a combination of such networks. The particular design of the communications subsystems 170 depends on the network(s) in which the communications device 100 is intended to operate. The communication subsystems 170 may include a wireless communication subsystem 172 supporting voice and data communications and including a receiver, a transmitter, and associated components such as one or more antenna elements, and a processing module such as a digital signal processor (DSP) for exchanging radio frequency signals with the WWAN 174 through a base station 175. The communications device 100 may send and receive communication signals over the WWAN 174 after the required network registration or activation procedures have been completed. The communications device 100 may be capable of both wireless voice and data communications via the WWAN 174.

The communications device 100 may include an internet protocol (IP) communications subsystem 180 for communication with the WLAN 182 through a wireless access point 183. The wireless access point 183 may be configured in accordance with one of the IEEE 802.11 specifications. The communications device 100 may be equipped with a suitable antenna, RF transceiver, and software for accessing and using the WLAN connectivity of the wireless access point 183. The communications device 100 may be equipped to support Voice-over-IP (VoIP) communications over the WLAN 182.

The short-range communication subsystem 184 provides for communication between the communications device 100 and different systems or devices, which need not necessarily be similar devices. For example, the subsystem 184 may include an infrared device and associated circuits and components, or a wireless bus protocol compliant communication mechanism such as a Bluetooth® communication module to provide for communication with similarly-enabled systems and devices.

The processor 54 operates under stored program control and executes software modules 190 stored in memory such as persistent memory, for example, in the flash memory 144. The software modules 190 comprise operating system software 192 and may include a range of application modules, including, the user interface module 194, a voice communication module 195, a speech recognition module 196, the voice message module 197 and a personal information module (PIM) 198. The speech recognition module 196 or voice message module 197 may each comprise a separate module, may be part of the same module or be implemented in the voice communication module 195. The software modules may include an address book module, a calendar module, a messaging module, a web browser module, an email module, a notepad module, a push content viewing module, a map module and a media player module (not shown). The software modules 190 may among other things, each be implemented through stand-alone software modules, or combined together in one or more of the operating system 192 or one or more of the other software modules 190. In some implementations, the functions performed by each of the above identified modules may be realized as a plurality of independent elements, rather than a single integrated element, and any one or more of these elements may be implemented as parts of other software modules.

The user interface (UI) module 194 renders and displays a graphical user interface (GUI) on the display 120 of the communications device 100 in accordance with instructions of the operating system 192 and modules 190 (as applicable). The GUI allows interaction with and control over the operation of the communications device 100. The GUI may be displayed on the display 120 which may be a touchscreen display. The GUI is rendered prior to display by the operating system 192 or a software module 190 which causes the processor 54 to display content on the display 120. The processor 54 controls the overall operation of the communications device 100 in response to inputs received through the actuation of keys, buttons or dialogs displayed by the GUI on the touchscreen display 120, inputs received through the actuation of keys on the keypad 140, inputs received and recognized by the speech recognition module 196 or inputs received through other I/O subsystems 130.

The communications device 100 may include the personal information manager (PIM) module (198) having the ability to organize and manage data items relating to a user such as, but not limited to, instant messaging, email, calendar events, voice mail messages, appointments and task items. The PIM module 198 has the ability to send and receive data items via the wireless network 101. In some example implementations, PIM data items are seamlessly combined, synchronized, and updated via the wireless network 101, with the user's corresponding data items stored with the user's host computer system, or associated with the user's host computer system, or both, thereby creating a mirrored host computer with respect to these data items.

The software modules 190 or parts thereof may be temporarily loaded into volatile memory such as the RAM 146. The RAM 146 is used for storing runtime data variables and other types of data or information, as will be apparent to those skilled in the art. Although specific functions are described for various types of memory, this is merely an example, and those skilled in the art will appreciate that a different assignment of functions to types of memory could also be used.

In some implementations, the auxiliary input/output (I/O) subsystems 130 may comprise an external communication link or interface, for example, an Ethernet connection. The communications device 100 may comprise other wireless communication interfaces for communicating with other types of wireless networks, for example, a wireless network such as an orthogonal frequency division multiplexed (OFDM) network or a GPS transceiver for communicating with a GPS satellite network (not shown). The auxiliary I/O subsystems 130 may comprise a vibrator for providing vibratory notifications in response to various events on the communications device 100 such as receipt of an incoming phone call, the recognition of a spoken address in a voice mail message or for other purposes such as haptic feedback (touch feedback).

In some implementations, the communications device 100 also includes a removable memory card 142 (typically comprising flash memory) and a memory card interface 143. Network access typically is associated with a subscriber or user of the communications device 100 via the memory card 142, which may be a Subscriber Identity Module (SIM) card for use in a GSM network or other type of memory card for use in the relevant wireless network type. The memory card 142 is inserted in or connected to the memory card interface 143 of the communications device 100 in order to operate in conjunction with the wireless network 101.

The communications device 100 stores data in an erasable persistent memory, which in one example implementation is the flash memory 144. In various implementations, the data includes service data comprising information used by the communications device 100 to establish and maintain communication with the wireless network 101. The data may also include user application data such as email messages, address book and contact information including telephone numbers, recognized spoken addresses, calendar and schedule information, notepad documents, image files, and other commonly stored user information stored on the communications device 100 by its user, and other data. The data stored in the persistent memory (e.g. flash memory 144) of the communications device 100 may be organized, at least partially, into a number of databases each containing data items of the same data type or associated with the same application. Content protection measures may be applied to one or more data items or databases within the device memory.

The serial data port 132 may be used for synchronization with a user's host computer system (not shown). The serial data port 132 enables a user to set preferences through an external device or software module and extends the capabilities of the communications device 100 by providing for information or software downloads to the communications device 100 other than through the wireless network 101. The alternate download path may, for example, be used to load an encryption key onto the communications device 100 through a direct, reliable and trusted connection to thereby provide secure device communication.

A predetermined set of applications that control basic device operations, including data and voice communication applications will normally be installed on the communications device 100 during or after manufacture. Additional applications, upgrades to the operating system 192 or software modules 190 also may be loaded onto the communications device 100 through the wireless network 101, the auxiliary I/O subsystem 130, the serial port 132 or other suitable subsystems or other wireless communication interfaces. The downloaded programs or code modules may be permanently installed, for example, written into the program memory (i.e. the flash memory 144), or written into and executed from the RAM 146 for execution by the processor 54 at runtime. Such flexibility in application installation increases the functionality of the communications device 100 and may provide enhanced on-device functions, communication-related functions, or both. Secure communication applications may enable electronic commerce functions and other such financial transactions to be performed using the communications device 100.

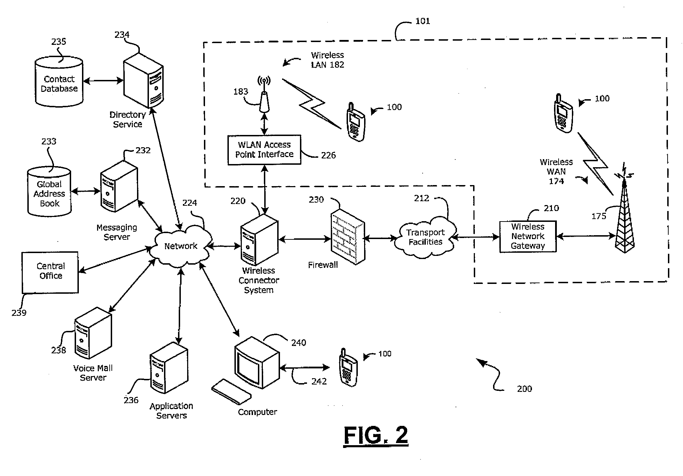

FIG. 2 shows in block diagram form a communication system 200 in which example embodiments of the present disclosure can be applied. The communication system 200 includes a number of communications devices 100 which may comprise mobile communications devices 100 and which may be connected to the remainder of system 200 in any of several different ways. Accordingly, several instances of communications devices 100 are depicted in FIG. 2 employing different example ways of connecting to system 200. In some embodiments, the mobile communications devices 100 are configured to communicate over both the WWAN 174 and WLAN 182, and to roam between these networks. In some embodiments, the wireless network 101 may comprise multiple WWANs 174 and WLANs 182.

The WWAN 174 may be implemented as any suitable wireless access network technology. By way of example, but not limitation, the WWAN 174 may be implemented as a wireless network that includes a number of transceiver base stations 175 (one of which is shown in FIG. 2) where each of the base stations 175 provides wireless Radio Frequency (RF) coverage to a corresponding area or cell. The WWAN 174 is typically operated by a mobile network service provider that provides subscription packages to users of the communications devices 100. In some embodiments, the WWAN 174 conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX), or various other networks. Although WWAN 174 is described as a "Wide-Area" network, that term is intended herein also to incorporate wireless Metropolitan Area Networks (WMAN) and other similar technologies for providing coordinated service wirelessly over an area larger than that covered by typical WLANs. Other types of data and voice networks, both separate and integrated, may also be utilized with the communications device 100.

The WWAN 174 may further comprise a wireless network gateway 210 which connects the communications devices 100 to transport facilities 212, and through the transport facilities 212 to a wireless connector system 220. Transport facilities may include one or more private networks or lines, the public Internet, a virtual private network, or any other suitable network. The wireless connector system 220 may be operated, for example, by an organization or enterprise such as a corporation, university, or governmental department, which allows access to a network 224 such as an internal or enterprise network and its resources, or the wireless connector system 220 may be operated by a mobile network provider.

The network 224 may be realised using the Internet rather than an internal or enterprise network. The network 224 may represent at least one wide area network such as the Internet as well as, potentially, multiple local area networks and a public switched telephone network (PSTN).

The wireless network gateway 210 provides an interface between the wireless connector system 220 and the WWAN 174, which facilitates communication between the communications devices 100 and other devices (not shown) connected, directly or indirectly, to the WWAN 174. Accordingly, communications sent via the communications devices 100 are transported via the WWAN 174 and the wireless network gateway 210 through transport facilities 212 to the wireless connector system 220. Communications sent from the wireless connector system 220 are received by the wireless network gateway 210 and transported via the WWAN 174 to the communications devices 100.

The WLAN 182 comprises a wireless network which, in some embodiments, conforms to IEEE 802.11x standards (sometimes referred to as Wi-Fi) such as, for example, the IEEE 802.11a, 802.11b or 802.11g standard. Other communication protocols may be used for the WLAN 182 in other embodiments such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN 182 includes one or more wireless RF Access Points (AP) 183 (one of which is shown in FIG. 2) that collectively provide a WLAN coverage area.

The WLAN 182 may be a personal network of the user, an enterprise network, or a hotspot offered by an Internet service provider (ISP), a mobile network provider, or a property owner in a public or semi-public area, for example. The access points 183 are connected to an access point (AP) interface 226 which may connect to the wireless connector system 220 directly (for example, if the access point 183 is part of an enterprise WLAN 182 in which the wireless connector system 220 resides), or indirectly as indicated by the dashed line of FIG. 2 via the transport facilities 212 if the access point 183 is a personal Wi-Fi network or Wi-Fi hotspot (in which case a mechanism for securely connecting to the wireless connector system 220, such as a virtual private network (VPN), may be required). The AP interface 226 provides translation and routing services between the access points 183 and the wireless connector system 220 to facilitate communication, directly or indirectly, with the wireless connector system 220.

The wireless connector system 220 may be implemented as one or more servers, and is typically located behind a firewall 230. The wireless connector system 220 manages communications, including email communications, to and from a set of managed communications devices 100. The wireless connector system 220 also provides administrative control and management capabilities over users and communications devices 100 which may connect to the wireless connector system 220.

The wireless connector system 220 allows the communications devices 100 to access the network 224 and connected resources and services such as a messaging server 232 (for example, a Microsoft Exchange™, IBM Lotus Domino™, or Novell GroupWise™ email server) having a global address book 233, a directory service 234 having a contact database 235 and other servers 236 such as a content server for providing content such as internet content or content from an organization's internal servers and an application server for implementing server based applications such as instant messaging (IM) applications to communications devices 100.

Also connected to the network 224 is a voice mail server 238 for performing voice mail services such as receiving, analyzing, storing and playing voicemail messages. The voice mail server 238 also may be configured to analyze and respond to voice mail messages as described below. Alternatively, the voice mail server 238 may be incorporated into the communications device 100. A central office 239 connected to the network 224 allows a traditional land-line telephone (not shown) to connect to and utilize the network 224 to establish voice communications with the communications device 100 or to retrieve, analyze and play voice mail messages from the voice mail server 238.

The wireless connector system 220 typically provides a secure exchange of data (e.g., email messages, personal information manager (PIM) data, and IM data) with the communications devices 100. In some embodiments, communications between the wireless connector system 220 and the communications devices 100 are encrypted. In some embodiments, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data.

The wireless network gateway 210 is adapted to send data packets, including but not limited to voice data, received from the communications device 100 over the WWAN 174 to the wireless connector system 220. The wireless connector system 220 then sends the data packets to the appropriate connection point such as the messaging server 232, content server 234 or application servers 236. Conversely, the wireless connector system 220 sends data packets received, for example, from the messaging server 232, content server 234 or application servers 236 to the wireless network gateway 210 which then transmit the data packets to the destination communications device 100. The AP interfaces 226 of the WLAN 182 provide similar sending functions between the communications device 100, the wireless connector system 220 and network connection point such as the messaging server 232, content server 234 and application server 236.

The network 224 may comprise a private local area network, metropolitan area network, wide area network, the public Internet or combinations thereof and may include virtual networks constructed using any of these, alone, or in combination.

The communications device 100 may alternatively connect to the wireless connector system 220 using a computer 240, such as desktop or notebook computer, via the network 224. A link 242 may be provided for exchanging information between the communications device 100 and computer 240 connected to the wireless connector system 220. The link 242 may comprise one or both of a physical interface and short-range wireless communication interface. The physical interface may comprise one or combinations of an Ethernet connection, Universal Serial Bus (USB) connection, Firewire™ (also known as an IEEE 1394 interface) connection, or other serial data connection, via respective ports or interfaces of the communications device 100 and computer 240. The short-range wireless communication interface may be a personal area network (PAN) interface. A personal area network is a wireless point-to-point connection meaning no physical cables are required to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the Bluetooth™ special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the communications devices 100. The teachings of the present disclosure may be employed in connection with any other type of network and associated devices that are effective in implementing or facilitating wireless communication. Suitable variations of the communication system will be understood to a person of skill in the art and are intended to fall within the scope of the present disclosure.

The communications device 100 may provide two principal modes of communication: a data communication mode and a voice communication mode. In the data communication mode, a received data signal such as a text message, an email message, or web page download will be processed by the communication subsystem 170 and input to the processor 54 for further processing and output on the display 120 or alternatively to the auxiliary I/O device 130. A user of the communications device 100 also may compose data items, such as email messages, for example, using the keyboard 140 in conjunction with the display 120 and possibly the auxiliary I/O subsystems 130. These composed items may be transmitted through the communication subsystems 170 over the wireless networks 101.

In the voice communication mode, the communications device 100 provides telephony functions and operates as a typical cellular phone or as a VoIP phone. Received signals are output to the speaker 136 and signals for transmission would be generated by a transducer such as the microphone 138. The telephony functions are provided by a combination of software/firmware (i.e., the voice communication module 195) and hardware (i.e., the microphone 138, the speaker 136 and input devices). Alternative voice or audio I/O subsystems, such as a voice message recording subsystem, also may be implemented on the communications device 100. In some implementations, voice or audio signal output is accomplished primarily through the speaker 136. The display 120 also may be used to provide an indication of the identity of a calling party, duration of a voice call, an address associated with the voice mail message or other voice call related information, or a combination thereof. Information regarding a missed call, the presence of a new voice mail message or the recognition of an address in a voice mail message may be provided on the display 120, through an alert 134, such as a visible alert or flashing LED, or through an auxiliary I/O such as a vibrator.

The conditions for initiating a voice communications connection and for receiving a voice mail are generally well known. One or more addresses are associated with the communications device 100 for initiating and establishing a voice communication to the communications device 100. The form, content and length of the address will depend on the geographic location of the communications device 100, the communication services supported by the communications device 100 and the types of the one or more networks through which the communications device 100 may be reached. Non-limiting examples of an address include a telephone number associated with a land-line or cellular telephone, an IP address associated with a VoIP-enabled device, a string of characters or an email address. For example, under the North American numbering plan, an address is comprised of ten numbers.

A voice communication may be initiated to the communications device 100 from another communications device 100 or any other device supporting voice communications. An incoming voice communication may be redirected to the voice mail server 238 when the called communication line is busy or when the called communication line is not answered after a predetermined number of rings. Additionally, an incoming voice communication may be redirected to the voice mail server 238 when the communications device 100 is "out of service". When out of service, the communications device 100 may be turned off or in a place that limits the ability for the communications device 100 to communicate through a network, such as the WLAN 182 or WWAN 174. A voice mail message also may be generated within the voice mail server 238 and then stored in a destination voice mail box on the voice mail server 238. A voice mail box typically is created by the voice mail server 238 for storing one or more voice mail messages associated with an address of the communications device 100.

A voice mail message comprises an audio recording of speech of the calling party for a short predetermined time period, such as a several seconds or minutes. The voice mail message may include information for initiating a voice communication to contact the calling party such as one or more addresses and methods by which the calling party may be reached. The addresses may be associated with the device from which the calling party initiated the call, or the device from which the voice mail message was created or the addresses may be associated with other devices. The voice mail message may include further identification of the addresses, such as information to contact the calling party at a first address at home or to reach the calling party at a second address at work. Time information also may be included in the voice mail message to instruct the user of the device to contact the calling party at a first address up until a specific time, after which the calling party may be contacted at a second address.

An indication of the presence of a new voice mail message in a voice mail box is provided by the voice mail server 238 to the communications device 100. The communications device 100 may generate an indication, such as a flashing light, a vibration of the communications device 100, an audible alert, or the presentation of or a change in the presentation of an icon on the display 120, or a combination thereof, to alert a user to the new voice mail message.

The actions to contact the voice mail server 238 from the communications device 100 also are known and varied. The communications device 100 may be configured to initiate a communication to the voice mail server 238 in response to an extended actuation of the "1" button or in response to actuation of a predetermined sequence of numbers. A "speed dial" number may be configured or a "voice dial" command may be provided to quickly initiate a call from the communications device 100 to the voice mail server 238. A dialog may appear as part of the user interface presented on the display 120 or a user may actuate an input device such as the keyboard 140 to cause the dialog to appear. The dialog provides the user an opportunity to select a command such as "Call voicemail". The dialog may include a command to "Call and respond to voicemail" in order to establish a communication between the communications device 100 and the voice mail server 238 and to analyze and respond to a voice mail message according to a method of the present disclosure.

At the voice mail server 238, the incoming communication from the communications device 100 is received and answered. The user of the communications device 100 may be requested to complete authentication steps to access the voice mail box on the voice mail server 238 containing voice mail messages for the communications device 100. Other known steps may be performed to select, delete or play voice mail messages.

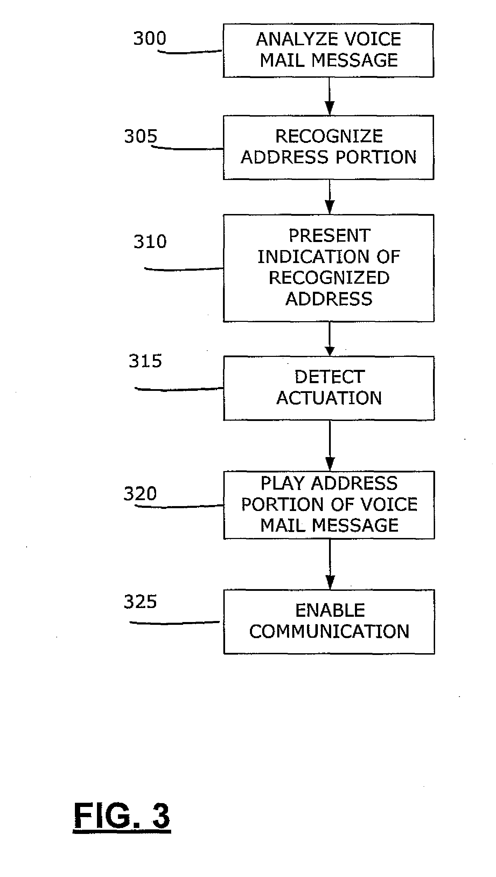

A method of analyzing and responding to voice mail messages is illustrated in FIG. 3. The method can be applied to "new" voice mail messages which have not been accessed previously or to "old" voice mail messages stored in a voice mail box which already have been accessed by the user. In one implementation, where the voice mail message is stored in the communications device 100, the method is executed by the communications device 100. In alternative implementations, the method is implemented by the voice mail server 238 and the communications device 100.

At action 300 the voice mail message is analyzed. The action of analyzing may occur in the voice mail server 238 prior to the voice mail message being accessed by a user or the action of analyzing may occur when the communications device 100 is in communication with the voice mail server 238 and has requested the voice mail server 238 to play the voice mail message. In one implementation, the voice mail message is analyzed when the voice mail message is generated by the calling party or when communication is established between the voice mail server 238 and the communications device 100. In other implementations, the voice mail message is analyzed by the voice mail server and transmitted to the communications device 100. Alternatively, the voice mail message is transmitted or downloaded to the communications device 100 and analyzed by the voice communications module 195, or by the voice message module 197, or by both the voice communications module 195 and the voice message module 197.

The action of analyzing 300 may include playing the message for the user at the communications device 100. The message is played through an audio output device such as the speaker 136. Alternatively, the message is converted to text by the voice mail server 238 or by the communications device 100 and played as text on the display 120 of the communications device 100.

At action 305, a portion of the voice mail message which is recognized as an address is identified as a spoken address. Known speech detection algorithms may be used to recognize the portion of the voice mail message containing a spoken sequence of numbers or characters which may comprise an address associated with the voice mail message. In one implementation, the speech detection algorithm identifies and uses key words or trigger words such as "call me" or "my number is" to detect an address following the trigger words. Where the address comprises an email address, trigger words may include "dot com" or a trigger may comprise the pronunciation of the "@" symbol. The algorithm to recognize the spoken address may be performed by the voice mail server 238 or by the communications device 100, such as by the voice message module 197, by the speech recognition module 196 or by a combination of both.

Zero, one or more than one address may be recognized in the voice mail message. One or more portions of the voice mail message recognized as an address may be stored as one or more audio recordings separate from and shorter than the audio recording of the voice mail message. The audio recordings thus comprise a portion of the voice mail message recognized as an address. In one implementation, the audio recordings include a number of seconds of the voice mail message before the portion of the voice mail message recognized as an address, or a number of seconds after the portion of the voice mail message recognized as an address, or both. The one or more portions of the voice mail message recognized as an address also may be converted from an audio recording to a string of characters comprising a recognized spoken address generated by the speech detection algorithm. An address of the calling device that created the voice mail message also may be identified by the communications device 100 or by the voice mail server 238.

The audio recordings, recognized spoken addresses and calling device address may be associated with the voice mail message and stored in the voice mail server 238 or in the communications device 100. In one implementation, the audio recordings, recognized spoken addresses and calling device address may be stored in association with an address book or personal information manager in the communications device 100. Additionally, addresses stored in an entry of the address book also may be associated with the voice mail message. For example, a recognized spoken address may correspond to a "home" address stored in an entry of the address book module. The address book entry also may contain alternative addresses such as a "work" address or a "Mobile" address which may or may not have been included in the voice mail message.

If errors are made by the speech detection algorithm in recognizing the string of characters of an address in the voice mail message and generating the recognized spoken address, the address of the recognized spoken address may not be the same as the address contained in the audio recording of the portion of the voice mail message which has been recognized as a spoken address. The address of the recognized spoken address and the address spoken in the audio recording also may differ from the address of the calling device.

At action 310, an indication of a recognized spoken address is presented to a user through the user interface of the communications device 100. In one implementation, where the voice mail message has been analyzed by the voice mail server 238 or by the communications device 100 prior to playing the voice mail message for the user, the indication of the recognized spoken address may be provided along with the indication that a new voice mail message has been generated. Alternatively, the indication of the recognized spoken address may be provided at the start of playing the voice mail message. In one implementation, as the voice mail message is played and presented to a user, the indication of the recognized spoken address may be provided upon the first recognition of a portion of the voice mail message as a spoken address. Alternatively, the indication may be provided at the end of the analyzing and playing of the voice mail message.

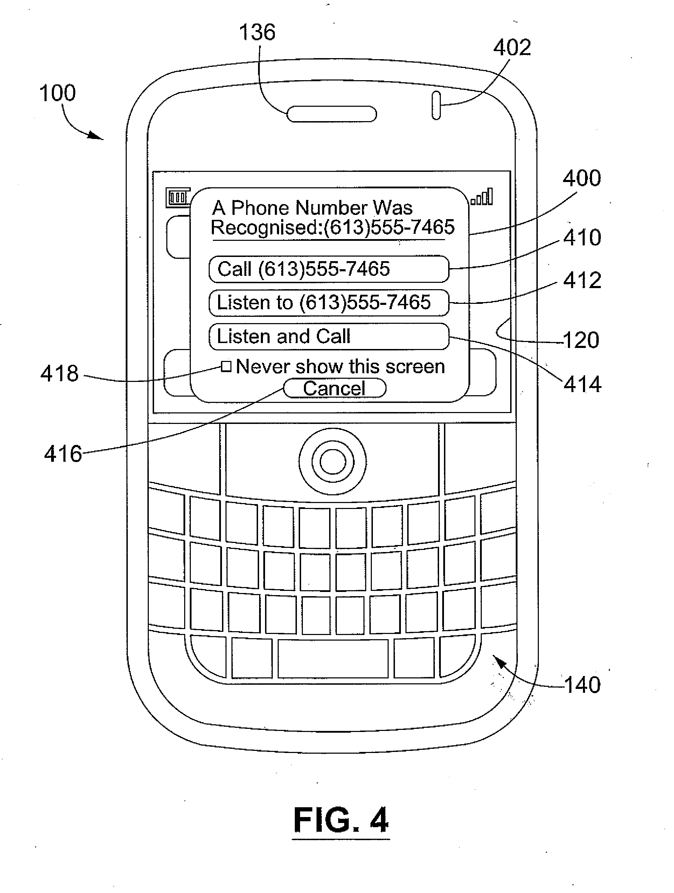

As illustrated in FIG. 4, the indication of the recognized spoken address may comprise a dialog provided on the display 120 of the communications device 100. The indication also may comprise activating the alert 134 of the communications device 100, such as vibrating the communications device 100, flashing a light 402 of the communications device 100 or generating an audible tone or beep. The indication of the recognized spoken address may comprise providing text information on the display 120 of the communications device 100. The text information may include an indication that "A Phone Number Was Recognized" and the string of characters comprising the recognized spoken address. One or more indications may be provided to correspond to one or more recognized spoken addresses. For example, two recognized spoken addresses may be indicated by flashing a light of the communications device 100 two times. Two separate strings of characters comprising the two recognized spoken addresses may be provided on the display 120. Additional text information recognized by the speech recognition module 196 also may be provided with the recognized spoken addresses on the display 120, such as a name or a location such as "home" or "work".

The dialog also may consist of a menu of commands presented to the user on the display 120 and keys on the keyboard 140 or other inputs of the communications device 100 associated with the menu commands. In one implementation where the display 120 comprises a touchscreen display, the dialog consists of a menu of commands defined as inputs and displayed as predefined areas or buttons on the touchscreen display. The commands are provided to allow a user to instruct the communications device 100 to take further action in response to the recognized spoken address. As shown in FIG. 4, the dialog may include commands to call 410 the recognized spoken address; listen 412 to the recognized spoken address; listen and call 414 the recognized spoken address or cancel 416 the indication. Similar commands may be provided for each recognized spoken address if more than one address was recognized. A command 418 may be provided to allow a user to cause the communications device 100 to cease the display of the dialog 400. Additional commands not shown in FIG. 4 also may be provided to, for example, enable a user to cease playing of the voice mail message, store a recognized spoken address in association with an address book or to store a recognized spoken address as a reminder in a calendar or event module in order to prompt the user to call the recognized spoken address at a later time.

At action 315, actuation of the indication is detected. The actuation may be detected as input received for one of the commands presented in the dialog 400, including, for example, detection of an input at a predefined area on a touchscreen display, detection of a press of a key on the keyboard 140, detection of a click of a scroll wheel or other input. Actuation of the indication also may comprise a voice command received through the microphone of the communications device 100 to listen and call 414 the recognized spoken address. In response to the detected actuation, the communications device 100 may execute the command associated with the touchscreen button or a key on the keyboard 140.

Where the indication of the recognized spoken address is provided as a flashing light 402 or vibration of the communications device 100, the actuation may comprise detection of a press of a key on the keyboard 140, activation of a button on the touchscreen 120, or other input. In response to this input, a dialog such as the dialog 400 in FIG. 4 may be displayed to prompt the user for additional inputs.

At action 320, in response to the detected actuation in one implementation, the voice communications module 195 or the voice message module 197 may play the audio recording of the portion of the voice mail message recognized as the spoken address through the speaker 136 of the communications device 100. The playing of the audio recording allows a user to listen to and verify the address recognized as the spoken address. The recognized spoken address also may be provided on the display 120 of the communications device 100 either through the dialog 400 or through a new dialog or display of text provided on the display 100 concurrently with the playing of the audio recording in response to the detected actuation.

At action 325, communication to an address associated with the voice mail message is enabled. Enabling communication may comprise setting the communications device 100 in a state able to support the communication. Enabling communication may comprise initiating a communication through the voice communications module 195 to the recognized spoken address. Alternatively, enabling communication may comprise receiving a sequence of character inputs through the keyboard 140 or the touchscreen display 120 of the communications device 100 comprising an address associated with the voice mail message. A communication to the received address may be initiated by the voice communications module 195. The received address may or may not correspond to the recognized spoken address, the address of the calling device, or an address in the address book.

In one implementation, communication to an address associated with the voice mail message may be enabled during the playing of the audio recording. While communication to the calling party via an address associated with the voice mail message is enabled, a user may listen to the audio recording to confirm the numbers in the spoken portion of the voice mail message recognized as the address. Thus, the received address may comprise the address listened to and entered by a user in response to the address played in the audio recording. The received address thus may comprise a corrected version of the recognized spoken address if errors were made in generating the recognized spoken address. Alternatively, where communication has been initiated to the recognized spoken address, a user may cancel the communication if the recognized spoken address provided on the display 120 of the communications device 100 does not correspond to the address in the audio recording.

While the present disclosure is primarily described in terms of methods, a person of ordinary skill in the art will understand that the present disclosure is also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

The various implementations presented above are merely examples and are in no way meant to limit the scope of this disclosure. Variations of the innovations described herein will be apparent to persons of ordinary skill in the art, such variations being within the intended scope of the present application. In particular, features from one or more of the above-described implementations may be selected to create alternative implementations comprised of a sub-combination of features which may not be explicitly described above. In addition, features from one or more of the above-described implementations may be selected and combined to create alternative implementations comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method of analyzing and responding to voice mail messages in communications devices, the method comprising:
analyzing a voice mail message (300);
recognizing a portion of the voice mail message as a spoken address (305);
presenting an indication of the recognized spoken address (310) through a user interface of the communications device (100);
detecting an actuation of the indication (315); and
in response to the detected actuation,
playing, by an audio output of the communications device, an audio recording of the portion of the voice mail message recognized as the spoken address (320), and
enabling a communication (325) to an address associated with the voice mail message.

2. The method of claim 1 wherein enabling the communication (325) occurs during the playing of the audio recording of the portion of the voice mail message recognized as the spoken address (320).

3. The method of claim 1 or claim 2 further comprising, in response to the detected actuation, ceasing the analyzing of the voice mail message.

4. The method of any one of claims 1 to 3 wherein enabling the communication (325) to the address associated with the voice mail message comprises initiating communication to the recognized spoken address.

5. The method of any one of claims 1 to 3 wherein enabling the communication (325) to the address associated with the voice mail message comprises receiving the address associated with the voice mail message from a user input of the communications device and initiating communication to the received address.

6. The method of any one of claims 1 to 5 wherein presenting an indication of the recognized spoken address (310) comprises displaying the recognized spoken address on a display of the communications device.

7. The method of any one of claims 1 to 6 further comprising playing the voice mail message by the audio output during the analyzing of the voice mail message.

8. The method of claim 1 further comprising recognizing a second portion of the voice mail message as a second spoken address and wherein enabling the communication (325) to the address associated with the voice mail message comprises presenting a communication initiation dialog including the recognized spoken address and the second recognized spoken address on a display of the communications device.

9. The method of claim 1 wherein recognizing a portion of the voice mail message as a spoken address (305) further comprises using a speech recognition algorithm to recognize the spoken address.

10. A communications device (50, 100) for analyzing and responding to voice mail messages, comprising:
a voice communications interface (52);
an audio output (58,136);
a user interface (56); and
a controller (54, 110) for controlling the operation of the communications device (50, 100);
the controller (54, 110) being configured to: analyze a voice mail message; recognize a portion of the voice mail message as a spoken address; present an indication of the recognized spoken address through the user interface (56); detect an actuation of the indication; and in response to the detected actuation, play an audio recording of the portion of the voice mail message recognized as the spoken address through the audio output (58,136) and enable a communication to an address associated with the voice mail message through the voice communications interface (52).

11. The communications device (50, 100) of claim 10 wherein the controller (54, 110) is further configured to enable the communication during the playing of the audio recording of the portion of the voice mail message recognized as the spoken address.

12. The communications device (50, 100) of claim 10 or claim 11 wherein the controller (54, 110) is further configured to, in response to the detected actuation of the indication, cease the analyzing of the voice mail message.

13. The communications device (50, 100) of any one of claims 10 to 12 wherein the controller (54, 110) is further configured to initiate a communication to the recognized spoken address.

14. The communications device (50, 100) of any one of claims 10 to 12 wherein the controller (54, 110) is further configured to receive an address associated with the voice mail message through the user interface (56) of the communications device and initiate a communication to the received address.

15. A voice mail server (238) for analyzing voice mail messages, the server comprising:
a voice communications interface (52); and
a controller (54, 110) for controlling the operation of the server;
the controller (54, 110) being configured to: analyze a voice mail message; recognize a portion of the voice mail message as a spoken address; transmit an indication of the recognized spoken address; detect an actuation of the indication; and in response to the detected actuation, play an audio recording of the portion of the voice mail message recognized as the spoken address and enable a communication to an address associated with the voice mail message through the voice communications interface (52).

## Amended claims

### Amended claims in accordance with Rule 137(2) EPC.

**1.** A method of analyzing and responding to voice mail messages in communications devices, the method comprising:
analyzing a voice mail message (300);
recognizing a portion of the voice mail message as a spoken address (305);
presenting an indication of the recognized spoken address (310) through a user interface of the communications device (100);
detecting an actuation of the indication (315); and
in response to the detected actuation,
playing, by an audio output of the communications device, an audio recording of the portion of the voice mail message recognized as the spoken address (320), and
enabling a communication (325) to an address associated with the voice mail message by receiving an address associated with the voice mail message from a user input of the communications device and initiating communication to the received address during the playing of the audio recording of the portion of the voice mail message recognized as the spoken address (320).

**2.** The method of claim 1 further comprising, in response to the detected actuation, ceasing the analyzing of the voice mail message.

**3.** The method of claim 1 or claim 2 wherein presenting an indication of the recognized spoken address (310) comprises displaying the recognized spoken address on a display of the communications device.

**4.** The method of any one of claims 1 to 3 further comprising playing the voice mail message by the audio output during the analyzing of the voice mail message.

**5.** The method of claim 1 further comprising recognizing a second portion of the voice mail message as a second spoken address and wherein enabling the communication (325) to the address associated with the voice mail message comprises presenting a communication initiation dialog including the recognized spoken address and the second recognized spoken address on a display of the communications device.

**6.** The method of claim 1 wherein recognizing a portion of the voice mail message as a spoken address (305) further comprises using a speech recognition algorithm to recognize the spoken address.

**7.** A communications device (50, 100) for analyzing and responding to voice mail messages, comprising:
a voice communications interface (52);
an audio output (58,136);
a user interface (56); and
a controller (54, 110) for controlling the operation of the communications device (50, 100);
the controller (54, 110) being configured to: analyze a voice mail message; recognize a portion of the voice mail message as a spoken address; present an indication of the recognized spoken address through the user interface (56); detect an actuation of the indication; and in response to the detected actuation, play an audio recording of the portion of the voice mail message recognized as the spoken address through the audio output (58,136) and receive an address associated with the voice mail message through the user interface (56) of the communications device and initiate a communication to the received address through the voice communications interface (52) during the playing of the audio recording of the portion of the voice mail message recognized as the spoken address.

**8.** The communications device (50, 100) of claim 7 wherein the controller (54, 110) is further configured to, in response to the detected actuation of the indication, cease the analyzing of the voice mail message.

**9.** The communications device (50, 100) of claim 7 or claim 8wherein the controller (54, 110) is further configured to initiate a communication to the recognized spoken address.
